# EUROPEAN PATENT SPECIFICATION

(11) **EP 3 355 736 B1**
(45) Date of publication and mention of the grant of the patent: **30.09.2020**
(21) Application number: 16770314.9
(22) Date of filing: 14.09.2016
(51) Int. Cl.: A42B 3/04

(54) **ILLUMINATION SYSTEM FOR A SAFETY HELMET**
BELEUCHTUNGSSYSTEM FÜR EINEN SCHUTZHELM
SYSTÈME D'ÉCLAIRAGE POUR CASQUE DE SÉCURITÉ

(30) Priority: 01.10.2015 GB 201517388
(43) Date of publication of application: 08.08.2018
(73) Proprietor: JSP Limited, Oxfordshire OX29 0TA (GB)
(72) Inventor: WILLIAMS, Mark, Witney Oxfordshire OX29 0TA (GB); JOHNSTONE, Clive, Witney Oxfordshire OX29 0TA (GB); SANDERS, Stephen, Witney Oxfordshire OX29 0TA (GB)
(74) Representative: Wynne-Jones IP Limited
(86) International application number: PCT/GB2016/052846
(87) International publication number: WO 2017/055804

(56) References cited:
- US-A- 6 007 213
- US-A1- 2010 128 468
- US-A1- 2010 177 505
- US-A1- 2010 232 175

## Description

This invention relates generally to an illumination system for a safety helmet and, more particularly but not necessarily exclusively, to an illumination system for a safety helmet for use in potentially hazardous environments such as construction sites, roadwork sites, and the like.

Operatives working in potentially hazardous environments, such as construction sites and the like, are required by statute in most jurisdictions worldwide to wear a safety helmet or 'hard hat' to prevent severe head trauma in the event of an accident. Numerous different types of such safety helmets are widely known and extensively used throughout various industries.

Various light emitting devices and systems have been proposed and used in relation to safety helmets. For example, headlamps of various sizes and configurations have been provided, wherein an operative can mount such a headlamp to their safety helmet so as to provide a focused beam of light which not only provides a source of light to facilitate certain tasks, but also improves their visibility within the working environment.

Indeed, there is an ongoing desire and need to improve visibility of operatives within certain potentially hazardous sites, that operate throughout the night in busy and hazardous conditions. Serious, sometimes fatal, accidents have been known to occur on such sites and lack of visibility is believed to have been a major contributing factor in many cases.

A significant drawback of the above-described, helmet-mounted headlamps in relation to operative visibility is that the brightness of the source may glare and be too blinding for other operatives to face the wearer directly.

Various types of personal protective equipment (PPE) exist for enhancing user visibility, whereby reflective strips/stickers may be provided on garments worn on-site by an operative, including their safety helmet. The reflective strips reflect light from an external source such that they appear illuminated and improve the wearer's visibility. However, such systems are, of course, passive systems that rely on an external light source to illuminate reflective portions thereof and provide limited personal illumination in terms of intensity and scope. Furthermore, illumination created by the use of reflective strips cannot be controlled in any way.

US Patent Application Publication No. 2014/0043795A1 describes a light emitting system for headgear. The system comprises a ring or 'halo' of LEDs designed to be mounted around the base of a safety helmet. The use of a plurality of LEDs in this manner is intended, not only to provide a user with 360° visibility, but also provide enhanced lighting within their personal workspace to facilitate certain tasks. However, as a result, the system adds a significant weight to a user's headgear, that may become uncomfortable over time. Furthermore, a relatively large power supply is required to operate numerous LEDs continuously or a useful period of time, which further increases the overall weight of the system, as well as the cost.

US Patent Application Publication No. US 2010/0177505 A1 describes a light-emitting warning device of a safety helmet, including a helmet main body, a light guide element and a light source control mechanism. An annular locating groove and a receiving cavity are formed on an outer face of the helmet main body. Two end sections of the locating groove communicate with the receiving cavity via two through holes formed in the helmet main body. An elongated flexible strip body is received in the locating groove. Two end sections of the light guide element extend through the through holes into the receiving cavity to connect with the light source control mechanism. The light source control mechanism project light into the light guide element, and emit as a lighting ring along the periphery of the helmet main body.

US Patent Application Publication No. US 2010/0232175 A1 describes a freely plastically flexible light-emitting strip structure, which is a hollow light guide strip body made of transparent material. The light guide strip body is formed with at least one axial internal chamber. A plastically flexible strip body is implanted in the internal chamber. Recessed/raised sections are formed on a wall of the internal chamber, the recessed/raised sections deflect or reflect the projected light, whereby the light guide strip body can emit light outward. The plastically flexible strip body makes the light guide strip body plastically flexible and self-patternable. Accordingly, the configuration of the light guide strip body is freely adjustable in accordance with the requirements of use sites so as to enlarge application range and provide enhanced decorative or warning effect.

US Patent Application Publication No. US 2010/0128468 describes an illuminator device that attaches to a safety helmet for providing illumination when a user is moving. The safety helmet includes an exterior surface. The illuminator device includes a fibre optic cable having two ends and adapted for mounting on the safety helmet so as to illuminate an exterior of the safety helmet. The illuminator device includes a light source coupled to a light interface, the light interface connected to one end of the fibre optic cable, the light source being activateable. A motion detector detects motion or motion of a preselected type or amount and provides a signal to activate the light source upon detection of motion or preselected motion.

US Patent Application Publication Number 6,007,213 describes an illuminated safety helmet for use during potentially dangerous activities, such as bicycling or rollerblading. The helmet is a two piece helmet having a hard outer shell and a high density polystyrene inner shell. An illuminating assembly is recessed within the exterior portion of the inner shell. The illuminating assembly has a power source connected to various light sources, which are exemplary light emitting diodes (LEDs). The LEDs are connected to a multitude of fiber optic cables via a cylindrical connector. Light from the LEDs shine into an end of the fiber optic cable. This light emits out of the cladding of the fiber optic cable if the cable is a side light fiber optic cable. The light emits out of the other end of the cable if the cable is a point-to-point fiber optic cable. The outer shell has a transparent portion corresponding to the pathway taken by the illuminating assembly so that light can emit past the outer shell at various light intensities. Alternative embodiments utilizing ionized gas light sources are also described.

It is an object of aspects of the present invention to address at least some of these issues and, in accordance with claim 1 of the present invention, there is provided an illumination system for a safety helmet, comprising a generally tubular light guide formed of a light transmissive fibre-optic material, said light guide being configured to be mounted on a safety helmet so as to have a proximal wall adjacent a surface of said safety helmet and an opposing distal wall, and at least one light emitting device coupled at an input to said light guide, wherein an inner surface of said proximal wall of said light guide is provided with at least one refractive portion configured to converge light incident thereon from said light emitting device onto said distal wall so as to create a discrete illuminated portion thereon, in use; characterised in that the illumination system comprises: a pair of generally tubular light guides with a light emitting device coupled at a respective input of each of said light guides, wherein each light guide is configured to be mounted on a respective side of a safety helmet and has a respective refractive portion on the inner surface of a proximal wall thereof; a housing in which a power supply and light emitting devices are housed, and from which the pair of light guides extend, the power supply being coupled to said light emitting devices; and a releasable connector member; wherein a proximal end of each light guide is located within the housing with its input end coupled to a respective light emitting device, and a distal end of each light guide is connected to the releasable connector member to form a closed loop in use.

The housing is configured to be mounted, removably on a rear surface of said safety helmet such that said light guides extend around respective sides of said safety helmet, in use, toward an opposing front surface thereof. Thus, the system comprises a pair of fibre-optic light guides, wherein each light guide has a light source at its input and, in use, extends around a respective side wall of a safety helmet (either from the back to the front or vice versa). This is particularly advantageous, as it reduces the path length that the light from the light emitting devices has to travel (by half) in order to provide a complete ring or 'halo' around the base of a safety helmet. Thus, the size/power of the required light emitting devices can be significantly reduced, without loss of brightness.

Each light guide has plurality of refractive portions provided on the inner surface of its proximal wall, said refractive portions being arranged in spaced apart relation along its length such that, in use, a plurality of discrete illuminated portions are created on a distal wall of a respective light guide. Thus, rather than providing a continuous fibre-optic strip of lighting, or a set of aligned LEDs, the present invention proposes the use of one or more light guides configured to use a single light emitting device to create one or more illuminated portions, giving the impression of discrete light sources, but without the power and weight overhead otherwise required.

The system may further comprise a control module for effecting intermittent illumination of the or each light emitting device. The control module may be configured to enable the or each light emitting device to be operated in one of a plurality of operating modes. Such operating modes may include continuous, slow flash and fast flash. The control module may include a manually operable selection device for enabling a user to select an operating mode.

A system according to an exemplary embodiment of the invention is configured to be removably mounted for use on a surface of a safety helmet. An outer surface of said proximal wall of each light guide and/or an adjacent surface of said safety helmet is provided with a reflective portion for reflecting light incident thereon toward a distal wall of a respective light guide.

The or each light emitting device may be a light emitting diode, and optionally an orange or amber LED, on the basis that orange/amber light is generally more visible to the human eye.

In an exemplary embodiment, each refractive portion may comprise an engraved portion. The engraved portion may be in the configuration of a logo, shape or word, such that the respective illuminated portion created, in use, at a distal wall of a respective light guide corresponds substantially with the logo, shape or word of said engraved portion.

In accordance with another aspect of the present invention, there is provided a safety helmet having mounted thereon an illumination system substantially as described above.

In accordance with yet another aspect of the present invention, there is provided a kit of parts comprising a safety helmet and an illumination system substantially as described above configured to be removably mounted on a surface of said safety helmet.

These and other aspects of the present invention will be apparent from the following specific description, in which embodiments of the present invention are described, by way of examples only, and with reference to the accompanying drawings, in which:
Figure 1 is a schematic rear view of a safety helmet having an illumination system according to an exemplary embodiment of the present invention mounted thereon;
Figure 2 is a schematic perspective side view of the safety helmet of Figure 1;
Figure 3 is a schematic front view of the safety helmet of Figures 1 and 2;
Figure 4 is a schematic cross-sectional view of a fibre-optic cable of an illumination system according to an exemplary embodiment of the present invention;
Figure 5 is a schematic illustration of an illumination system according to an exemplary embodiment of the invention; and
Figure 5A is an enlarged schematic illustration of the portion marked A in Figure 5.

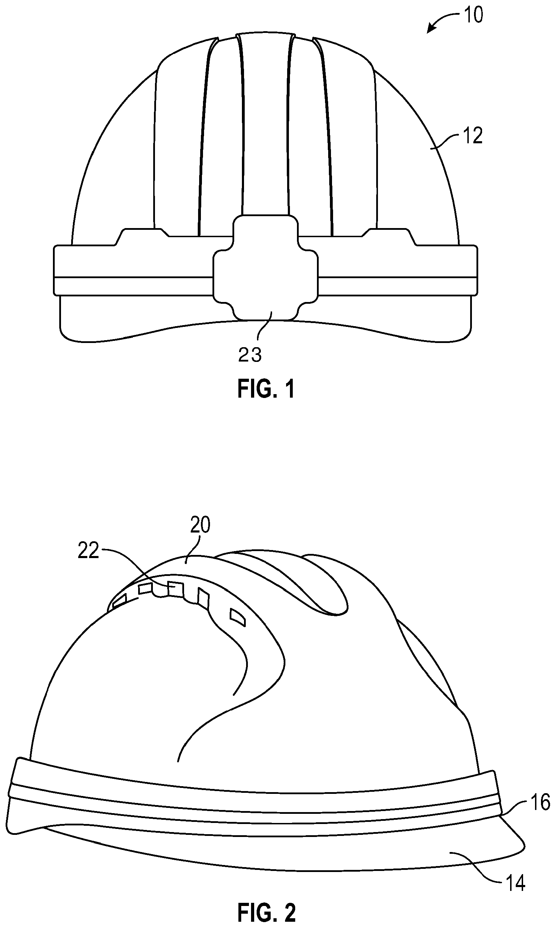

Referring to Figures 1 to 5 of the drawings, an illumination system according to an embodiment of the present invention is removably mounted on a safety helmet or 'hard hat' 10. A hard hat 10 is routinely used in the construction industry, for example, to protect a user's head from falling objects or other impacts. A hard hat is typically a rigid structure having a crown portion 12, that defines a head receiving cavity, and a brim 14 extending from a lower peripheral portion 16. Various projections, ridges and other structures may be formed in the hard hat 10 to provide additional rigidity or other functionality. For example, a set of raised ribs 20 may be provided generally centrally across the top of the crown portion 12 (extending from the rear), having side edges in which are defined ventilation holes 22. Additionally, although not shown, it is common to provide connector members at the lower peripheral portion 16 of the hard hat 10, to enable an internal strap/harness assembly to be affixed for use within the head receiving cavity of the crown portion 12.

An illumination system 18 according to an embodiment of the present invention comprises a housing 23 within which is provided a power supply (not shown), such as a USB rechargeable Lithium Polymer (LiPo) battery, a pair of orange or amber light emitting diodes (LEDs) (not shown) oriented to emit light into the fibre optic cables (24a, 24b to be described hereinafter), and a third LED directed downwardly to provide an illumination light for the charging port of the battery. Although other battery types could be used and the present invention is not necessarily intended to be limited in this regard, the LiPo battery is considered to be advantageous as it enables a relatively very lightweight battery box to be provided, and is largely resistant to physical trauma.

Extending from the housing 23, there is provided a pair of generally tubular light transmissive fibre-optic cables 24a, 24b. Such cables may be formed of thermoplastic polyurethane (TPU) with a high UV stability specification (to mitigate degradation or 'yellowing' due to exposure to UV radiation). Each cable 24a, 24b extends from a respective one of opposing side edges of the housing. The (proximal) end of each fibre-optic cable 24a, 24b, located within the housing 23, is its input end, which is coupled to a respective LED. The distal ends of the cables 24a, 24b are connected to a releasable connector member 26, such as a clasp, catch or clip member, to form a closed loop in use. When in use, the fibre optic cables may terminate at respective sides of the helmet, close to the front section (i.e. at the connection with the connector member 26. The terminated ends of the fibre-optic cables may be provided with a mirror cap (i.e. a reflective end portion) that acts to reflect any unused light back down the fibre-optic cable, to enhance the luminosity output of the system and increase the useful visibility distance of thereof. The terminated ends are located within the respective portions of the connector member so the mirror cap may be provided as a coating on the inner or outer surface of the end of the fibre-optic cable itself, or at a convenient location within the respective connector member portion.

The illumination system 18 is removably mounted on the hard hat 10 by affixing the housing 23 to the rear surface of the hard hat 10, at or near the rear lower peripheral edge, arranging the fibre-optic cables 24a, 24b around respective sides of the hard hat 10, and then securing the distal ends of the cables at the front of the hard hat 10 using the connector member 26 to close the loop. Small portions of adhesive could be used to secure the illumination system directly to the helmet or to small clips provided thereon for this purpose, or releasable clips or clasps could be employed to retain the illumination system on the helmet for use, but this is not necessarily essential.

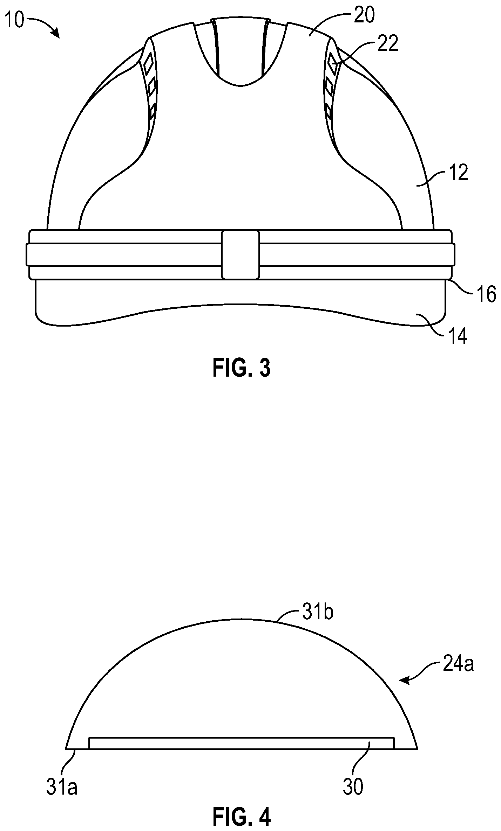

The hard hat 10 may be provided with a recess that extends around the periphery of the crown portion 12 at or near its lower peripheral edge 16. Such a recess may be shaped and configured to receive and retain a respective fibre-optic cable 24a, 24b therein when the system is mounted for use on the hard hat 10. However, in alternative exemplary embodiments, no recess is necessary, and the illumination system can be provided on existing helmet designs, without modification. The cross-section of the fibre-optic cable may be substantially circular, but may advantageously be substantially semi-circular, with a flat 'rear' surface (against the surface of the helmet, in use) and a convex opposing front surface, as illustrated schematically in Figure 4A of the drawings. Thus, in use, when mounted on the hard hat, the flat surface lies substantially flush against the outer surface of the hard hat.

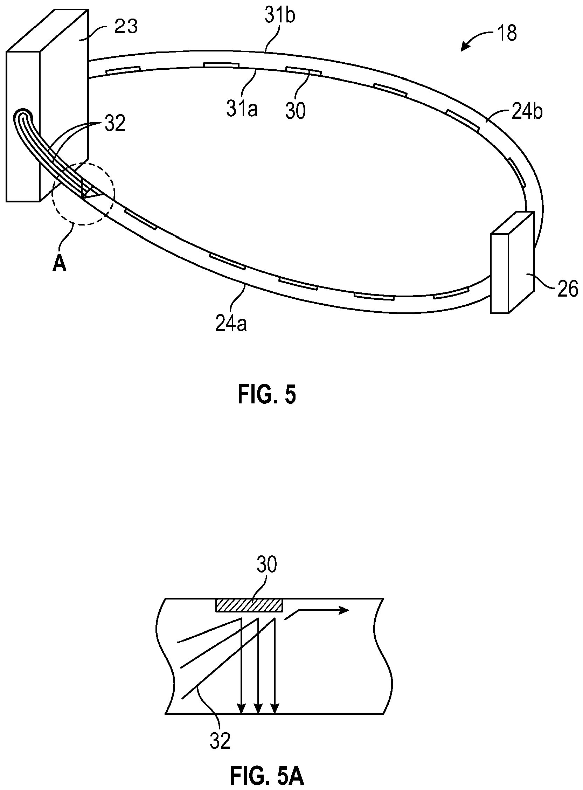

As shown additionally in Figure 5 of the drawings, the rear surface of each fibre-optic cable 24a, 24b is provided with a plurality of refractive portions 30 in spaced apart relation along its length. The refractive portions 30 are illustrated as raised portions in Figure 5, but this is purely for clarity and, whilst not essential, it is envisaged that the refractive portions 30 may, in fact, be formed by engraving a pattern on the inner surface of the fibre-optic cable 24a, 24b. Such engraving may, for example, take the form of a logo, word, letter, number, symbol, shape, picture, etc but the present invention is in no way intended to be limited in this regard. In an exemplary embodiment, the engravings may be substantially 12mm wide, 3mm high and 30mm apart, which is considered to provide an advantageous surface area coverage for extensive light refraction to occur, and provide highly visible illumination all the way along each fibre-optic cable.

The refractive portions 30 are provided on the inner surface of the wall 31a of the fibre-optic cable that is immediately adjacent the hard hat surface when the system is mounted thereon for use (hereinafter referred to as the 'proximal wall'). In use, and referring additionally to Figure 5A of the drawings, light 32 from a respective LED travels along a respective fibre-optic cable until it reaches a refractive portion 30. A portion of the light 32 is refracted by each respective refractive portion 30, and converged onto the opposing distal wall 31b of the fibre-optic cable so as to create a discrete visible illuminated portion which may correspond in appearance to the configuration of the respective refractive portion 30. A reflective coating (not shown), e.g. a silver coloured reflective sticker, may be provided on the outer surface of the proximal wall 31a of each fibre-optic cable (immediately adjacent the outer surface of the hard hat, in use), and/or such a layer or coating may be provided on the surface of the hard hat 10 (immediately adjacent the proximal wall of the fibre-optic cables, in use), in order to further enhance the brightness of the resultant illuminated portion by reflecting any light that escapes through the proximal wall of the fibre-optic cable back toward the opposing distal wall.

It is envisaged that the housing 23 may have therein a control module (not shown, comprising a microcontroller and a toggle switch or other selection means, wherein the microcontroller is coupled to the LEDs to control their operation between a plurality of selectable modes of operation. For example, there may be three selectable modes of operation, each accessible in turn by repeated manual actuation of the toggle switch. The first mode of operation might be 'Slow flash', i.e. the LEDs are intermittently operated, with a relatively long 'off' period between flashes. This mode might be used to provide a maximum battery life (possibly up to 100 hours). A second mode of operation might be 'Fast flash', wherein the LEDs are once again intermittently operated, but with a much shorter 'off period between flashes, to provide a battery life of said 40 hours. Finally, a third mode of operation may be termed 'static', whereby the LEDs are permanently on for the entire period of use of the system, giving a limited battery life of, say, 10 hours or so.

The luminous intensity range provided by a system employing orange/amber LEDs and including a silver coloured reflective sticker at the proximal wall of the fibre-optic cables may be 0.24 to 1.23 mcd, and the borderline visibility distance provided in 'slow flash' mode might be 60metres, in 'fast flash' mode around 70 metres, and in constant mode around 80 metres, whereas the useful visibility distance in darkness for the same three modes might be 28, 33 metres and 40 metres respectively. Advantageously, the entire system may be substantially waterproof, to enable it to function effectively in poor weather conditions and/or wet environments. The entire system can be made relatively low weight, at around 50 grams, due to the configuration and small number of light weight components required to be used, and in direct contrast to prior art systems that may provide similar functionality in an entirely different way.

The above-mentioned control module may be used to provide some additional functionality to the system, as required. For example, a motion detection sensor may be provided and the signals therefrom used to control the mode of operation of the LEDs. Purely as an example, if the sensor detects that the user is moving, one of the flash modes may be selected, whereas if it is detected that the user is stationary, the static mode may be selected. Alternatively, the motion sensor signals may give rise to different flash patterns of the LEDs, depending on whether the user is in motion or stationary. In some exemplary embodiments, additional LEDs of different colours may be provided, and the control module may be configured to operate different LEDs depending on certain conditions. For example, a warning signal might be a different colour to those used during normal operation. The control module may be configured to switch the LEDs off after a predetermined period of inactivity. A low battery warning light or signal may be provided. An additional light emitting device may be provided that is operable to indicate when the battery is charging. A mode of operation may be defined to provide an indication/warning if the hard hat is determined to have been subjected to a severe impact. Finally, an SOS mode of operation may be defined, wherein the LEDs are configured to flash the Morse code for SOS or similar.

It will be appreciated by a person skilled in the art, from the foregoing description, that modifications and variations can be made to the described embodiments, without departing from the scope of the invention as defined by the appended claims

## Claims

1. An illumination system (18) for a safety helmet (10), said illumination system (18) comprising:
a generally tubular light guide (24a, 24b) formed of a light transmissive fibre-optic material, said light guide (24a, 24b) being configured to be mounted on a safety helmet (10) so as to have a proximal wall (31a) adjacent a surface of said safety helmet (10) and an opposing distal wall (31b), and
a light emitting device coupled at an input to said light guide (24a, 24b),
wherein an inner surface of said proximal wall (31a) of said light guide (24a, 24b) is provided with at least one refractive portion (30) configured to converge light incident thereon from said light emitting device onto said distal wall (31b) so as to create a discrete illuminated portion thereon, in use; and
**characterised in that** the illumination system comprises:
a pair of generally tubular light guides (24a, 24b) with a light emitting device coupled at a respective input of each light guide (24a, 24b), wherein each light guide (24a, 24b) is configured to be mounted on a respective side of a safety helmet (10) and has a respective refractive portion (30) on the inner surface of a proximal wall (31a) thereof;
a housing (23) in which a power supply and light emitting devices are housed, and from which said light guides (24a, 24b) extend, the power supply being coupled to said light emitting devices; and
a releasable connector member (26);
wherein a proximal end of each light guide (24a, 24b) is located within the housing (23) with its input end coupled to a respective light emitting device, and a distal end of each light guide (24a, 24b) is connected to the releasable connector member (26) to form a closed loop in use.

2. A system according to claim 1, wherein the light guides (24a, 24b) have a substantially semi-circular cross-section with a substantially flat proximal wall (31a) and a curved opposing distal wall (31b).

3. A system according to claim 1 or 2, wherein the distal end of each light guide (24a, 24b) is provided with a reflective end portion that acts to reflect any unused light back down the fibre-optic cable, to enhance the luminosity output of the system and increase the useful visibility distance of thereof,
and optionally
wherein the reflective end portion is provided as a coating on the inner or outer surface of the end of the light guide (24a, 24b), or at a location within the connector member (26).

4. A system according to claim 1 or 2, wherein said housing (23) is configured to be mounted on a rear surface of said safety helmet (10) such that said light guides (24a, 24b) extend around respective sides of said safety helmet (10), in use, toward an opposing front surface thereof.

5. A system according to any of the preceding claims, wherein each light guide has a plurality of refractive portions (30) provided on the inner surface of its proximal wall (31a), said refractive portions (30) being arranged in spaced apart relation along its length such that, in use, a plurality of discrete illuminated portions are created on a distal wall (31b) of a respective light guide.

6. A system according to claim 5, wherein each refractive portion (30) comprises an engraved portion.

7. A system according to claim 6, wherein each engraved portion is in the configuration of a logo, shape or word, such that the respective illuminated portion created, in use, at a distal wall (31b) of a respective light guide corresponds substantially with the logo, shape or word of said engraved portion.

8. A system according to any of the preceding claims, further comprising a control module for effecting intermittent illumination of the or each light emitting device, and optionally wherein said control module is configured to enable the or each light emitting device to be operated in one of a plurality of operating modes.

9. A system according to claim 8, wherein said operating modes include continuous, slow flash and fast flash, and/or wherein said control module includes a manually operable selection device for enabling a user to select an operating mode.

10. A system according to any of claims 8 to 9, further comprising a motion detection sensor having an output coupled to said control module, wherein said control module is configured to select an operating mode in accordance with a predetermined motion control signal.

11. A system according to any of the preceding claims, configured to be removably mounted for use on a surface of a safety helmet (10).

12. A system according to any of the preceding claims, wherein an outer surface of said proximal wall (31a) of the or each light guide (24a, 24b) and/or an adjacent surface of said safety helmet (10) is provided with a reflective portion for reflecting light incident thereon toward a distal wall (31b) of a respective light guide (24a, 24b).

13. A system according to any of the preceding claims, wherein the or each light emitting device is a light emitting diode, and optionally wherein the or each light emitting device is an orange or amber light emitting diode.

14. A safety helmet (10) having mounted thereon an illumination system (18) according to any of the preceding claims.

15. A kit of parts comprising a safety helmet and an illumination system according to any of the preceding claims configured to be removably mounted on a surface of said safety helmet.

## Patentansprüche

1. Beleuchtungssystem (18) für einen Schutzhelm (10), wobei das Beleuchtungssystem (18) umfasst:
einen im Allgemeinen röhrenförmigen Lichtleiter (24a, 24b), der aus einem lichtdurchlässigen faseroptischen Material gebildet ist, wobei der Lichtleiter (24a, 24b) so konfiguriert ist, dass er so auf einem Schutzhelm (10) angebracht werden kann, dass eine proximale Wand (31a) benachbart zu einer Oberfläche des Schutzhelms (10) und einer gegenüberliegenden distalen Wand (31b) hat und eine Licht emittierende Vorrichtung, die an einem Eingang mit dem Lichtleiter (24a, 24b) gekoppelt ist, wobei eine Innenfläche der proximalen Wand (31a) des Lichtleiters (24a, 24b) mit mindestens einem Brechungsabschnitt (30) versehen ist, der konfiguriert ist, um darauf einfallendes Licht, das von der Licht emittierenden Vorrichtung auf die distale Wand (31b) einfällt, zu bündeln, um bei Gebrauch einen einzelnen beleuchteten Abschnitt darauf zu erzeugen; und
**dadurch gekennzeichnet, dass** das Beleuchtungssystem umfasst:
ein Paar allgemein röhrenförmiger Lichtleiter (24a, 24b) mit einer Licht emittierenden Vorrichtung, die an einen jeweiligen Eingang jedes Lichtleiters (24a, 24b) gekoppelt ist, wobei jeder Lichtleiter (24a, 24b) so konfiguriert ist, dass er auf einer jeweiligen Seite eines Schutzhelms (10) montiert werden kann und einen entsprechenden Brechungsabschnitt (30) an der Innenfläche einer proximalen Wand (31a) davon aufweist;
ein Gehäuse (23), in dem eine Stromversorgung und Licht emittierende Vorrichtungen untergebracht sind und von dem sich die Lichtleiter (24a, 24b) erstrecken, wobei die Energieversorgung mit den Licht emittierenden Vorrichtungen gekoppelt ist; und
ein lösbares Verbindungselement (26);
wobei ein proximales Ende jedes Lichtleiters (24a, 24b) innerhalb des Gehäuses (23) angeordnet ist, wobei sein Eingangsende mit einer jeweiligen Licht emittierenden Vorrichtung gekoppelt ist und ein distales Ende jedes Lichtleiters (24a, 24b) mit dem lösbaren Verbindungselement (26) zur Bildung einer geschlossenen Schleife im Gebrauch verbunden ist.

2. System nach Anspruch 1, wobei die Lichtleiter (24a, 24b) einen im Wesentlichen halbkreisförmigen Querschnitt mit einer im Wesentlichen flachen proximalen Wand (31a) und einer gekrümmten gegenüberliegenden distalen Wand (31b) aufweisen.

3. System nach Anspruch 1 oder 2, wobei das distale Ende jedes Lichtleiters (24a, 24b) mit einem reflektierenden Endabschnitt versehen ist, der dazu dient, nicht verwendetes Licht zurück in das Glasfaserkabel zu reflektieren, um die Leuchtkraftausgabe des Systems zu verbessern und den nützlichen Sichtbarkeitsabstand davon zu erhöhen und wobei gegebenenfalls der reflektierende Endabschnitt als Beschichtung auf der Innen- oder Außenfläche des Endes des Lichtleiters (24a, 24b) oder an einer Stelle innerhalb des Verbindungselements (26) vorgesehen ist.

4. System nach Anspruch 1 oder 2, wobei das Gehäuse (23) so konfiguriert ist, dass es auf einer Rückseite des Schutzhelms (10) so montiert ist, dass sich die Lichtleiter (24a, 24b) um die jeweiligen Seiten des Schutzhelms (10) im Gebrauch in Richtung einer gegenüberliegenden Vorderseite davon erstrecken.

5. System nach einem der vorhergehenden Ansprüche, wobei jeder Lichtleiter mehrere Brechungsabschnitte (30) aufweist, die an der Innenfläche seiner proximalen Wand (31a) vorgesehen sind, wobei die Brechungsabschnitte (30) in einem Abstand voneinander entlang seiner Länge derart angeordnet sind, dass im Gebrauch mehrere einzelne beleuchtete Abschnitte an einer distalen Wand (31b) eines jeweiligen Lichtleiters erzeugt werden.

6. System nach Anspruch 5, wobei jeder Brechungsabschnitt (30) einen gravierten Abschnitt umfasst.

7. System nach Anspruch 6, wobei jeder gravierte Abschnitt die Konfiguration eines Logos, einer Form oder eines Wortes aufweist, sodass der jeweilige beleuchtete Abschnitt, der bei Verwendung an einer distalen Wand (31b) eines jeweiligen Lichtleiters erzeugt wird, im Wesentlichen dem Logo, der Form oder dem Wort des gravierten Abschnitts entspricht.

8. System nach einem der vorhergehenden Ansprüche, ferner umfassend ein Steuermodul zum Bewirken einer intermittierenden Beleuchtung der oder jeder Licht emittierenden Vorrichtung, wobei gegebenenfalls das Steuermodul konfiguriert ist, um zu ermöglichen, dass die oder jede Licht emittierende Vorrichtung in einer von mehreren Betriebsarten betrieben wird.

9. System nach Anspruch 8, wobei die Betriebsarten einen kontinuierlichen, langsamen und schnellen Blitz umfassen und/oder wobei das Steuermodul eine manuell betätigbare Auswahlvorrichtung umfasst, um es einem Benutzer zu ermöglichen, eine Betriebsart auszuwählen.

10. System nach einem der Ansprüche 8 bis 9, ferner umfassend einen Bewegungserfassungssensor mit einem Ausgang, der mit dem Steuermodul gekoppelt ist, wobei das Steuermodul konfiguriert ist, um eine Betriebsart gemäß einem vorbestimmten Bewegungssteuersignal auszuwählen.

11. System nach einem der vorhergehenden Ansprüche, konfiguriert, um entfernbar zur Verwendung auf einer Oberfläche eines Schutzhelms (10) montiert zu werden.

12. System nach einem der vorhergehenden Ansprüche, wobei eine Außenfläche der proximalen Wand (31a) des oder jedes Lichtleiters (24a, 24b) und/oder eine angrenzende Oberfläche des Schutzhelms (10) mit einem reflektierenden Abschnitt versehen ist, um darauf einfallendes Licht in Richtung einer distalen Wand (31b) eines jeweiligen Lichtleiters (24a, 24b) zu reflektieren.

13. System nach einem der vorhergehenden Ansprüche, wobei die oder jede Licht emittierende Vorrichtung eine Leuchtdiode ist und wobei gegebenenfalls die oder jede Licht emittierende Vorrichtung eine orange- oder bernsteinfarbene Leuchtdiode ist.

14. Schutzhelm (10), auf dem ein Beleuchtungssystem (18) gemäß einem der vorhergehenden Ansprüche montiert ist.

15. Teilesatz, umfassend einen Schutzhelm und ein Beleuchtungssystem gemäß einem der vorhergehenden Ansprüche, konfiguriert, um entfernbar auf einer Oberfläche des Schutzhelms montiert zu werden.

## Revendications

1. Système d'éclairage (18) pour un casque de sécurité (10), ledit système d'éclairage (18) comprenant :
un guide de lumière généralement tubulaire (24a, 24b) formé d'un matériau à fibres optiques de transmission de lumière, ledit guide de lumière (24a, 24b) étant configuré pour être monté sur un casque de sécurité (10) de façon à avoir une paroi proximale (31a) adjacente à une surface dudit casque de sécurité (10) et une paroi distale opposée (31b), et un dispositif électroluminescent couplé au niveau d'une entrée dudit guide de lumière (24a, 24b), dans lequel une surface interne de ladite paroi proximale (31a) dudit guide de lumière (24a, 24b) est pourvue d'au moins une partie de réfraction (30) configurée pour faire converger la lumière incidente sur celle-ci depuis ledit dispositif électroluminescent sur ladite paroi distale (31b) de façon à créer une partie éclairée distincte sur celle-ci, lors de l'utilisation ; et
**caractérisé en ce que** le système d'éclairage comprend :
une paire de guides de lumière généralement tubulaires (24a, 24b) comportant un dispositif électroluminescent couplé à une entrée respective de chaque guide de lumière (24a, 24b), dans lequel chaque guide de lumière (24a, 24b) est configuré pour être monté sur un côté respectif d'un casque de sécurité (10) et comporte une partie de réfraction (30) respective sur la surface interne d'une paroi proximale (31a) de celui-ci ;
un boîtier (23) dans lequel une alimentation électrique et des dispositifs électroluminescents sont logés, et à partir duquel lesdits guides de lumière (24a, 24b) s'étendent, l'alimentation électrique étant couplée auxdits dispositifs électroluminescents ; et
un élément de connecteur libérable (26) ;
dans lequel une extrémité proximale de chaque guide de lumière (24a, 24b) se trouve à l'intérieur du boîtier (23) avec son extrémité d'entrée couplée à un dispositif électroluminescent respectif, et une extrémité distale de chaque guide de lumière (24a, 24b) est reliée à l'élément de connecteur libérable (26) pour former une boucle fermée lors de l'utilisation.

2. Système selon la revendication 1, dans lequel les guides de lumière (24a, 24b) comportent une section transversale sensiblement semi-circulaire ayant une paroi proximale sensiblement plate (31a) et une paroi distale (31b) opposée incurvée.

3. Système selon la revendication 1 ou 2, dans lequel l'extrémité distale de chaque guide de lumière (24a, 24b) est pourvue d'une partie d'extrémité réfléchissante qui agit pour réfléchir toute lumière inutilisée vers le bas du câble à fibre optique, pour améliorer la sortie de luminosité du système et augmenter la distance de visibilité utile de celui-ci, et éventuellement dans lequel la partie d'extrémité réfléchissante est fournie sous forme de revêtement sur la surface interne ou externe de l'extrémité du guide de lumière (24a, 24b), ou à un emplacement à l'intérieur de l'élément de connecteur (26).

4. Système selon la revendication 1 ou 2, dans lequel ledit boîtier (23) est configuré pour être monté sur une surface arrière dudit casque de sécurité (10) de telle sorte que lesdits guides de lumière (24a, 24b) s'étendent autour des côtés respectifs dudit casque de sécurité (10), lors de l'utilisation, vers une surface avant opposée de celui-ci.

5. Système selon l'une quelconque des revendications précédentes, dans lequel chaque guide de lumière comporte une pluralité de parties de réfraction (30) prévues sur la surface interne de sa paroi proximale (31a), lesdites parties de réfraction (30) étant disposées en relation espacée le long de sa longueur de telle sorte que, lors de l'utilisation, une pluralité de parties éclairées distinctes soient créées sur une paroi distale (31b) d'un guide de lumière respectif.

6. Système selon la revendication 5, dans lequel chaque partie de réfraction (30) comprend une partie gravée.

7. Système selon la revendication 6, dans lequel chaque partie gravée présente la configuration d'un logo, d'une forme ou d'un mot, de telle sorte que la partie éclairée respective créée, lors de l'utilisation, au niveau d'une paroi distale (31b) d'un guide de lumière respectif corresponde sensiblement au logo, à la forme ou au mot de ladite partie gravée.

8. Système selon l'une quelconque des revendications précédentes, comprenant en outre un module de commande permettant d'effectuer un éclairage intermittent du ou de chaque dispositif électroluminescent, et éventuellement dans lequel ledit module de commande est configuré pour permettre au ou à chaque dispositif électroluminescent d'être actionné dans un mode de fonctionnement d'une pluralité de modes de fonctionnement.

9. Système selon la revendication 8, dans lequel lesdits modes de fonctionnement comprennent un flash continu, lent et rapide, et/ou dans lequel ledit module de commande comprend un dispositif de sélection pouvant être actionné manuellement pour permettre à un utilisateur de sélectionner un mode de fonctionnement.

10. Système selon l'une quelconque des revendications 8 à 9, comprenant en outre un capteur de détection de mouvement ayant une sortie couplée audit module de commande, dans lequel ledit module de commande est configuré pour sélectionner un mode de fonctionnement conformément à un signal de commande de mouvement prédéfini.

11. Système selon l'une quelconque des revendications précédentes, configuré pour être monté de façon amovible et destiné à être utilisé sur une surface d'un casque de sécurité (10).

12. Système selon l'une quelconque des revendications précédentes, dans lequel une surface externe de ladite paroi proximale (31a) du ou de chaque guide de lumière (24a, 24b) et/ou une surface adjacente dudit casque de sécurité (10) est pourvue d'une partie réfléchissante pour réfléchir la lumière incidente sur celle-ci vers une paroi distale (31b) d'un guide de lumière (24a, 24b) respectif.

13. Système selon l'une quelconque des revendications précédentes, dans lequel le ou chaque dispositif électroluminescent est une diode électroluminescente, et éventuellement dans lequel le ou chaque dispositif électroluminescent est une diode électroluminescente orange ou ambre.

14. Casque de sécurité (10) sur lequel un système d'éclairage (18) selon l'une quelconque des revendications précédentes est monté.

15. Trousse de pièces comprenant un casque de sécurité et un système d'éclairage selon l'une quelconque des revendications précédentes configuré pour être monté de façon amovible sur une surface dudit casque de sécurité.
